**Europäisches Patentamt**

(19) **European Patent Office**

**Office européen des brevets**

(11) Publication number : **0 406 953 B1**

(12) **EUROPEAN PATENT SPECIFICATION**

(45) Date of publication of patent specification :
25.11.92 Bulletin 92/48

(51) Int. Cl.⁵ : **A01D 25/02, A01D 27/02,**
**A01D 33/08, A01D 17/06**

(21) Application number : **90201727.6**

(22) Date of filing : **28.06.90**

(54) Harvester.

(30) Priority : **05.07.89 NL 8901717**

(43) Date of publication of application :
**09.01.91 Bulletin 91/02**

(45) Publication of the grant of the patent :
**25.11.92 Bulletin 92/48**

(84) Designated Contracting States :
**AT BE DE DK FR GB LU NL SE**

(56) References cited :
**EP-A- 0 098 824**
**DE-A- 3 022 845**
**FR-A- 2 533 798**

(73) Proprietor : **Nationale Coöperatieve Aan- en**
**Verkoopvereniging voor Land- en Tuinbouw**
**B.A. Cebeco Handelsraad**
**Blaak 31**
**NL-3011 GA Rotterdam (NL)**

(72) Inventor : **Blaauw, Doeko**
**Tukseweg 123**
**NL-8334 RT Steenwijk (NL)**

(74) Representative : **Konings, Lucien Marie**
**Cornelis Joseph et al**
**OCTROOIBUREAU ARNOLD & SIEDSMA**
**Sweelinckplein 1**
**NL-2517 GK Den Haag (NL)**

## Description

The invention relates to a harvester as designated in the preamble of claim 1. Such a harvester is known.

It is of importance in a harvester that the chassis thereof is properly steerable in order to be able to carry out the lifting operations well. It is further of great importance that the crop (the lifted beets) is properly cleaned. Only a little earth may adhere to the crop. This applies particularly to sugar beets. Cleaning rotors are employed to clean the crop. These are often spoked wheels which rotate in a lying plane and which further transport the beets passing over them to a following cleaning wheel or a following conveying means. An example is disclosed in document FR-A-2 533 798.

The invention has for its object to provide a harvester that is properly steerable and which cleans the crop well. To this end the harvester according to the invention has the characteristic of claim 1.

Because the swivel frame swivels in the same direction together with the steered wheels, the cleaning rotors arranged between these wheels can have a large size. The cleaning capacity increases with the diameter of the cleaning rotor. The whole length on the underside of the chassis can thus be employed to accommodate cleaning means. The harvester according to claim 4 is to be preferred in this respect.

The swivelling movement of the swivel frame can be coupled in simple manner to the steering movement of the wheels by means of a coupling rod, a flexible pulling and pushing member, two pulling members or a hydraulic transmission or other coupling means.

Mentioned and other features of the invention will be elucidated only by way of example in the description following hereinafter with reference to the drawings, wherein:

figures 1 and 2 show respectively a side view and a partly broken away top view of a preferred embodiment of a harvester according to the invention;

figure 3 shows on a larger scale a perspective view of a variant of detail III from figure 2;

figure 4 is a partial top view of another harvester according to the invention; and

figure 5 shows on a larger scale a perspective view of detail V from figure 4;

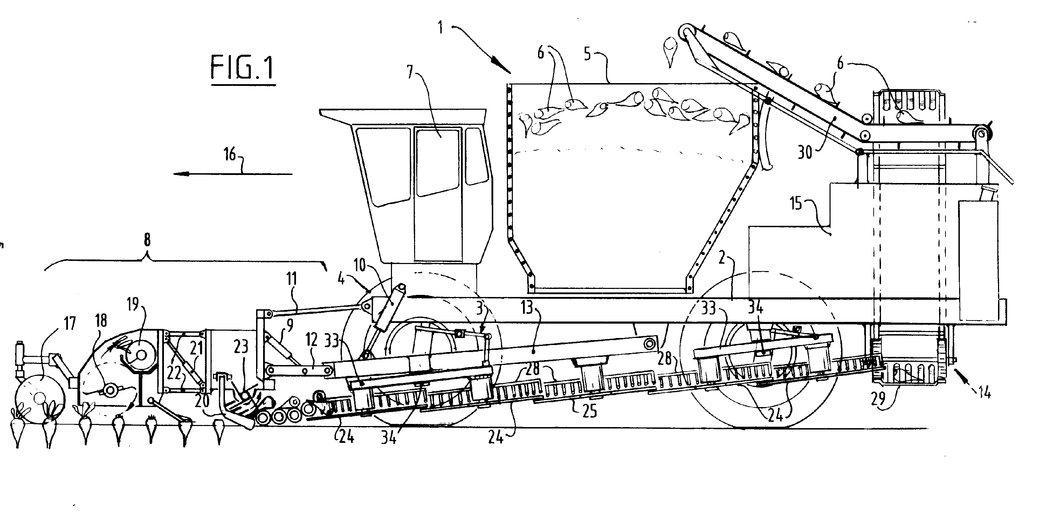

The harvester 1 from figure 1 comprises a chassis 2 movable over the land having two pairs of wheels 4 each steerable with an axial pivot steering 3. The chassis 2 bears a container 5, which may or may not be removable, for receiving lifted crop, in this example beets 6;

a driver's cab 7;

a lifting device 8 which is suspended level-adjustably from the chassis 2 by means of hydraulic cylinders 9, 10, pivot arms 11, 12 and a sub-frame 13;

a conveyor device 14, and

a motor unit 15 both for driving the forward movement of the harvester 1 in the direction of arrow 16 and for driving the lifting device 8, the conveyor device 14 and the hydraulic steering and operating system.

The lifting device 8 comprises a pair of level-adjusting rotors 17, a topping device 18, a transversely directed conveyor 19 for the topped portions, pairs of lifting shares 20 and a lifting rotor 23 rotating about a lying axis. The topping device 18 is also level-adjustable relative to the level of the lifting shares 20 by means of a hydraulic cylinder 21 and pivot arms 22. The conveying device 14 which also functions as cleaner comprises a series of two pairs of swivellable cleaning rotors 24 and a non-swivelling cleaner rotor 25 positioned therebetween. Each cleaning rotor 24, 25 is a so-called sun wheel preferably having curved steel spokes which rotates in a peripheral cage 28 about a standing axis and is driven for this purpose by a rotating hydromotor.

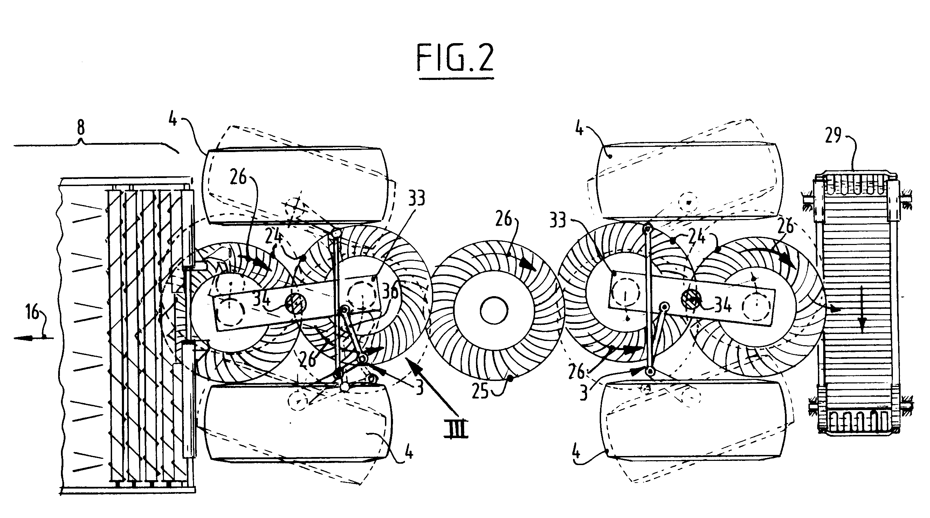

Shown in figure 2 are the rotational directions 26, which likewise designate the transport path of the beets 6.

At positions where the cleaning rotors mutually overlap the peripheral cage 28 is missing so that the beets 6 then pass onto the following cleaning rotor 24, 25 through centrifugal force.

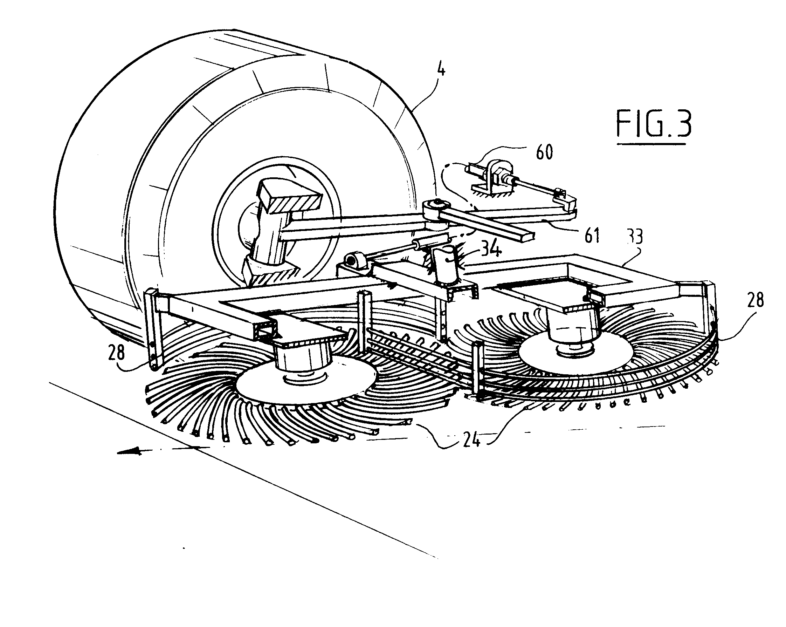

In figure 3 the swivel frame 33 is coupled to the steering arm 61 by means of a pulling and pushing cable 60.

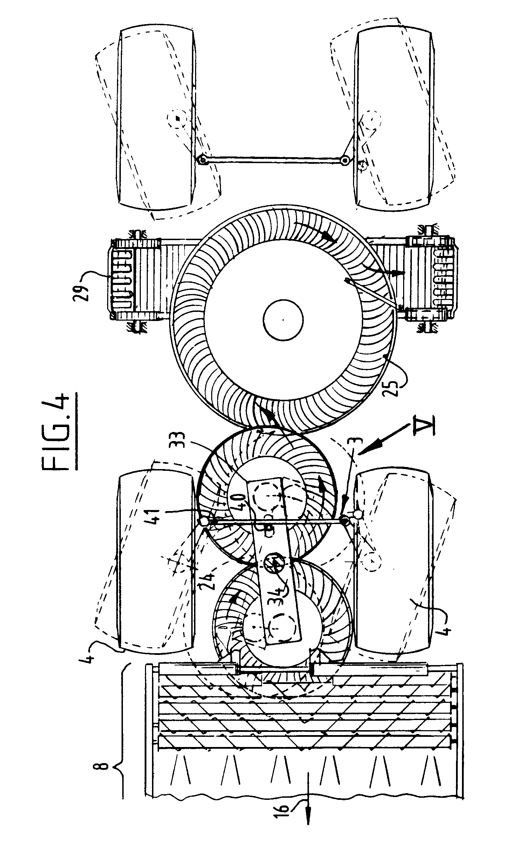

Figure 1 shows that the three foremost cleaning rotors 24, 25 are mounted to the up and downward movable sub-frame 13. In the operative position the cleaning rotors 24, 25 are directed sloping upward and the rearmost cleaning rotor 24 delivers beets 6 to an internal discharge conveyor 29 which carries the beets onto a conveyor 30 which drops them into the container 5. The cleaning rotors 24 are rotatably mounted pair-wise on a swivel frame 33 which is mounted for swivelling about a shaft 34 on the sub-frame 13 and the chassis 2. The swivelling movement of each swivel frame 33 is coupled to the steering movement of the wheels 4 because as in figures 1 and 2 the swivel frame 33 is coupled by means of a coupling rod 36 with ball joints to the extension of a steering arm of the axial pivot steering 3. Virtually the whole breadth between the wheels 4 can hereby be utilized for accommodating cleaning rotors 24 because they move together with the wheels 4 during steering of the harvester 1. In the case of clay ground a series of five cleaning rotors 24, 25 is of importance. Fewer cleaning rotors 24 are usually sufficient for sandy ground. A harvester 1 as in figure 4 is then to be preferred, wherein cleaning rotors 24 are only present between the front wheels 4 and wherein the crop 6 is carried from a central, large cleaning rotor 25 into an elevator conveyor 29 which immediately drops the crop into a container 5.

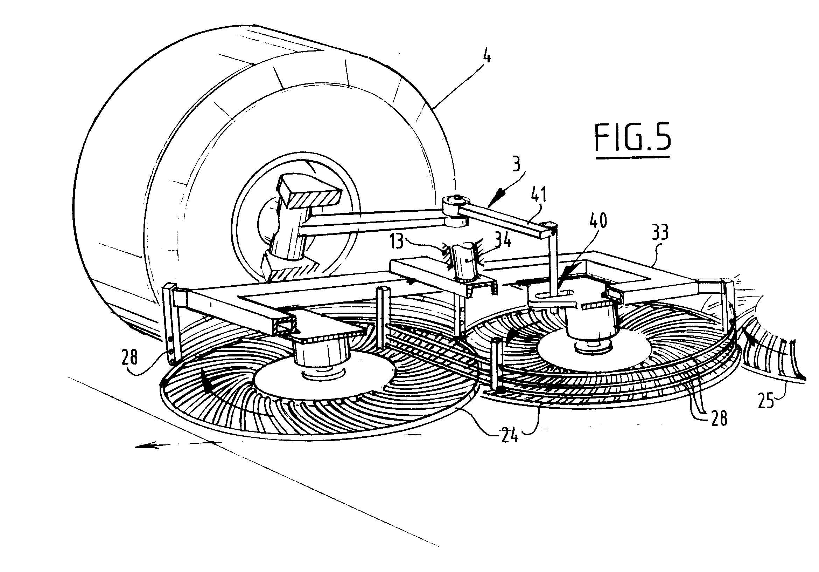

In figure 4 and 5 the swivel frame 33 is coupled via a slot-pin connection 40 to the track rod 41 of the axial pivot steering 3.

## Claims

1. Harvester (1) for bulbous or tuberous crops, particularly beets, comprising a chassis (2) movable over the land whereof at least one pair of wheels is provided with a steering device; at least one lifting device (8) carried by the chassis; at least one container (5) carried by the chassis for receiving lifted crop; and conveying means for conveying the crop from the lifting device (8) into the container, which conveying means comprise at least two cleaning rotors (24, 25), **characterized in that** at least two cleaning rotors (24, 25) are arranged between at least one pair of wheels (4) controlled by means of an axial pivot steering (3) and are rotatably mounted to a swivel frame (33) which is mounted on the chassis (2) for swivelling about a standing axis, wherein the swivel movement of the swivel frame (33) is coupled to the steering movement of the wheels (4) controlled by means of an axial pivot steering (3).

2. Harvester (1) as claimed in claim 1, **characterized in that** the swivel frame (3) is coupled to at least one steering arm by means of a coupling rod (36).

3. Harvester (1) as claimed in claim 1, **characterized in that** the swivel frame (33) is coupled to at least one steering arm (61) via a flexible pulling and pushing member (60).

4. Harvester (1) as claimed in claim 1 or 2, **characterized in that** at least two cleaning rotors (24, 25) are arranged in each case between at least two pairs of wheels (4) controlled by means of an axial pivot steering (3) and mounted rotatably on a swivel frame (33) which is mounted on the chassis (2) for swivelling about a standing axis, wherein the swivel movement of the swivel frame (33) is coupled to the steering movement of the wheels (4) controlled by means of an axial pivot steering (3).

5. Harvester (1) as claimed in any of the foregoing claims, **characterized in that** the swivel frame (33) is coupled to both steering arms via the track rod (41) of the axial pivot steering (3).

## Patentansprüche

1. Erntemaschine (1) für knollige oder knollenartige Ernte, insbesondere Rüben, mit einem über Land bewegbaren Chassis (2), dessen zumindest ein Paar Räder mit einer Steuereinrichtung versehen ist; wenigstens einer von dem Chassis getragenen Hebeeinrichtung (8); wenigstens einem von dem Chassis getragenen Behälter (5) zur Aufnahme der aufgenommenen Ernte; und einer Fördereinrichtung zum Fördern der Ernte von der Hebeeinrichtung (8) in den Behälter, wobei die Fördereinrichtung wenigstens zwei Reinigungsrotoren (24, 25) aufweist, dadurch gekennzeichnet, daß wenigstens zwei Reinigungsrotoren (24, 25) zwischen wenigstens einem Paar mittels einer axialen Schwenksteuerung (3) gesteuerten Rädern (4) angeordnet und drehbar an einem Schwenkrahmen (33) montiert sind, der auf dem Chassis (2) zum Zwecke des Schwenkens um eine stehende Achse montiert ist, wobei die Schwenkbewegung des Schwenkrahmens (33) mit der Steuerbewegung der mittels einer axialen Schwenksteuerung (3) gesteuerten Räder (4) gekoppelt ist.

2. Erntemaschine (1) nach Anspruch 1, dadurch gekennzeichnet, daß der Schwenkrahmen (3) mittels eines Kupplungsgestänges (36) mit wenigstens einem Steuerarm gekoppelt ist.

3. Erntemaschine (1) nach Anspruch 1, dadurch gekennzeichnet, daß der Schwenkrahmen (33) über ein flexibles Zug- und Schiebeteil (60) mit wenigstens einem Steuerarm (61) gekoppelt ist.

4. Erntemaschine (1) nach Anspruch 1 oder 2, dadurch gekennzeichnet, daß wenigstens zwei Reinigungsrotoren (24, 25) in jedem Fall zwischen wenigstens zwei Paaren von mittels einer axialen Schwenksteuerung (33) gesteuerten Rädern (4) angeordnet und auf einem Schwenkrahmen (33) drehbar montiert sind, der auf dem Chassis (2) zum Zwecke des Schwenkens um eine stehende Achse montiert ist, wobei die Schwenkbewegung des Schwenkrahmens (3) mit der Steuerbewegung der mittels einer axialen Schwenksteuerung (3) gesteuerten Räder (4) gekoppelt ist.

5. Erntemaschine (1) nach einem der vorstehenden Ansprüche, dadurch gekennzeichnet, daß der Schwenkrahmen (33) über die Spurstange (43) der axialen Schwenksteuerung (3) mit beiden Steuerarmen gekoppelt ist.

**Revendications**

1.  Moissonneuse (1) destinée à des récoltes de plantes à bulbes ou tubéreuses, en particulier les betteraves, comprenant un châssis (2) susceptible de se déplacer sur le sol et dont une paire au moins de roues est pourvue d'un dispositif de direction;

    au moins un dispositif de levage (8) supporté par le châssis;

    au moins un conteneur (5) supporté par le châssis, et destiné à recevoir le produit récolté soulevé du sol; et,

    des moyens transporteurs pour transporter le produit récolté du dispositif de levage (8) dans le conteneur, et qui comprennent au moins deux rotors de nettoyage (24,25), caractérisée en ce qu'au moins deux rotors de nettoyage (24,25) sont disposés entre au moins un couple de roues (4) commandées au moyen d'une direction (3) à pivot axial et sont montés à rotation sur un cadre à pivot (33) qui est monté sur le châssis (2) pour pivoter autour d'un axe vertical, dans lequel le mouvement de pivotement du cadre à pivot est couplé au mouvement de direction des roues (4) commandé au moyen d'une direction (3) à pivot axial.

2.  Moissonneuse (1) selon la revendication 1, caractérisée en ce que le cadre à pivot (3) est couplé à au moins un bras de direction au moyen d'une tige de couplage (36).

3.  Moissonneuse (1) selon la revendication 1, caractérisée en ce que le cadre à pivot (33) est couplé à au moins un bras de direction (61) par l'intermédiaire d'un organe de poussée et de traction (60) flexible.

4.  Moissonneuse (1) selon la revendication 1 ou 2, caractérisée en ce qu'au moins deux rotors de nettoyage (24,25) sont disposés dans chaque cas entre au moins deux couples de roues (4) commandées au moyen d'une direction (3) à pivot axial et montés à rotation sur un cadre à pivot (33) qui est monté sur le châssis (2) pour pivoter autour d'un axe vertical, dans lequel le mouvement de pivotement du cadre à pivot (33) est couplé au mouvement de direction des roues (4) commandées au moyen d'une direction (3) à pivot axial.

5.  Moissonneuse (1) selon une quelconque des revendications précédentes, caractérisée en ce que le cadre à pivot (33) est couplé aux deux bras de direction par l'intermédiaire de la barre d'accouplement (41) de la direction (3) à pivot axial.

FIG.1

# FIG.2

EP 0 406 953 B1

FIG.3

EP 0 406 953 B1

FIG.4

EP 0 406 953 B1

FIG.5